# FASCICULE DE BREVET EUROPEEN

(11) **EP 3 656 676 B1**
(45) Date de publication et mention de la délivrance du brevet: **09.06.2021**
(21) Numéro de dépôt: 19210224.2
(22) Date de dépôt: 20.11.2019
(51) Int. Cl.: B64D 29/08, B64C 7/02

(54) **NACELLE D'AÉRONEF COMPORTANT UN CAPOT À DEUX VANTAUX ARTICULÉS**
FLUGZEUGGONDEL MIT ZWEI FLÜGELTÜREN
AIRCRAFT NACELLE COMPRISING TWO HINGED DOOR PANELS

(30) Priorité: 22.11.2018 FR 1871718
(43) Date de publication de la demande: 27.05.2020
(73) Titulaire: AIRBUS OPERATIONS, 31060 Toulouse Cedex 9 (FR)
(72) Inventeur: LABARTHE, Christophe, 31660 Buzet sur Tarn (FR); GELIOT, Jean, 31400 Toulouse (FR)
(74) Mandataire: Cabinet Le Guen Maillet

(56) Documents cités:
- EP-A1- 2 862 805
- CA-A1- 2 893 341
- US-A- 2 564 530
- US-A1- 2004 227 033

## Description

### DOMAINE TECHNIQUE

La présente invention concerne une nacelle d'un d'aéronef comportant un capot à deux vantaux articulés, ainsi qu'un aéronef comportant une telle nacelle.

### ETAT DE LA TECHNIQUE ANTERIEURE

Un aéronef comporte classiquement un fuselage de part et d'autre duquel est fixée une aile. Chaque aile supporte au moins un mât d'accrochage qui supporte à son tour une nacelle et un moteur formant une turbomachine. La nacelle forme la surface aérodynamique qui entoure le moteur.

Le mât d'accrochage est fixé entre la structure de l'aile et la nacelle.

De nombreux systèmes, par exemple électriques et hydrauliques, sont disposés au niveau de la jonction entre le mât d'accrochage et la nacelle. Ces systèmes sont masqués par des capots aérodynamiques, comme par exemple certains de ceux constituant la nacelle.

En particulier, un capot situé en partie haute de la nacelle peut être retiré pour accéder aux systèmes cités ci-dessus et en particulier aux jonctions électriques entre le mât d'accrochage et le moteur.

Actuellement, un tel capot est fixé par plusieurs vis de fixation, et lors des étapes de maintenance, le retrait et la remise en place du capot sont longs.

Le document EP2862805 divulgue une nacelle d'un système de propulsion conventionnel, présentant un capot avec deux vantaux articulés dans leur partie supérieure.

### EXPOSE DE L'INVENTION

Un objet de la présente invention est de proposer une nacelle qui comporte un capot à deux vantaux articulés qui facilite l'accès aux systèmes localisés à la jonction entre le mât d'accrochage et le moteur.

A cet effet, est proposée une nacelle d'un aéronef, ladite nacelle présentant une entrée d'air et comportant :
- une structure,
- un capot amont fixé à ladite structure afin de réaliser une surface aérodynamique et s'étendant vers l'arrière depuis l'entrée d'air,
- un capot supérieur disposé en partie haute de la nacelle et à l'arrière du capot amont et présentant un vantail tribord et un vantail bâbord, chaque vantail étant articulé entre une position fermée dans laquelle ledit vantail est en continuité aérodynamique avec le capot amont et une position ouverte dans laquelle ledit vantail libère une ouverture dans la nacelle, chaque vantail présentant un bord avant disposé à l'avant du vantail, un bord arrière disposé à l'arrière du vantail, un bord intérieur qui, en position fermée, est contigu au bord intérieur de l'autre vantail, et un bord extérieur disposé du côté opposé au bord intérieur dudit vantail,
- pour chaque vantail, une articulation disposée au niveau du bord extérieur et fixée entre le vantail et la structure, ladite articulation assurant le déplacement du vantail de la position ouverte à la position fermée et inversement, et
- pour chaque vantail, un système de verrouillage réparti entre le bord avant et le bord arrière, et mobile entre une position de verrouillage dans laquelle il bloque le déplacement du vantail par rapport à la structure et une position de déverrouillage dans laquelle il autorise le déplacement du vantail par rapport à la structure.

Une telle nacelle facilite donc le travail des techniciens, puisque les deux vantaux articulés permettent une grande ouverture et un accès facile sous le capot. En outre, de tels vantaux sont plus légers qu'un capot monobloc.

Avantageusement, chaque articulation prend la forme de deux charnières en col de cygne, chacune étant fixée entre la structure et le vantail.

Avantageusement, la nacelle comporte une charnière au niveau du bord avant et une charnière est au niveau du bord arrière.

Avantageusement, chaque système de verrouillage comporte sur la structure et au voisinage du bord avant et du bord arrière, un pêne actionnable et mobile horizontalement, pour chaque pêne, une gâche solidaire du vantail dans laquelle le pêne pénètre en position de verrouillage et en sort en position de déverrouillage.

L'invention propose également un aéronef comportant un mât d'accrochage et une nacelle selon l'une des variantes précédentes, accroché audit mât d'accrochage.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'une nacelle selon l'invention, et
[Fig. 3] est une vue en perspective d'une partie de la nacelle de la Fig. 2 avec un capot à deux vantaux articulés selon l'invention en position ouverte.

### EXPOSE DETAILLE DE MODES DE REALISATION

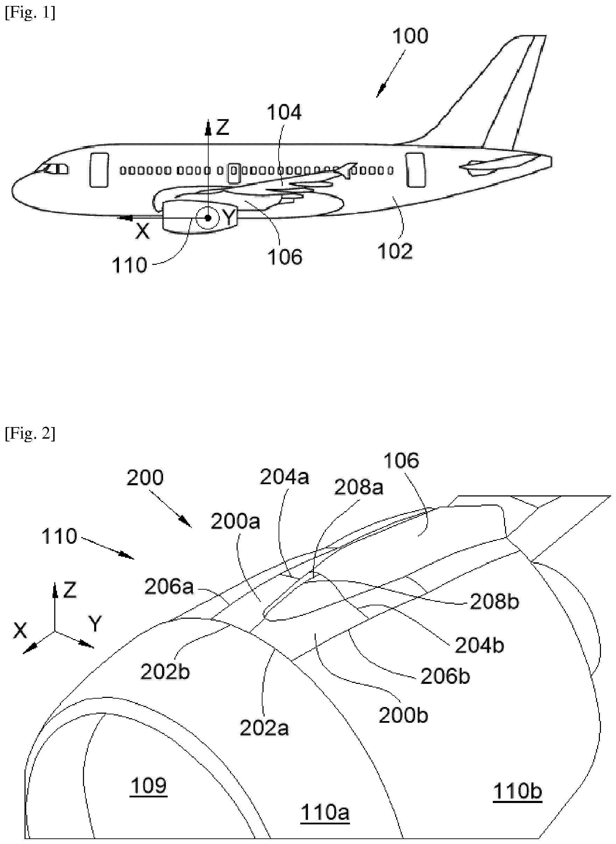

Dans la description qui suit, les termes relatifs à une position sont pris en référence à une nacelle montée sur un aéronef en marche avant, c'est-à-dire comme elle est représentée sur la Fig. 1.

La Fig. 1 montre un aéronef 100 qui comporte un fuselage 102 de part et d'autre duquel est fixée une aile 104. Sous chaque aile 104 est fixé un mât d'accrochage 106 auquel est accrochée une nacelle 110 et un moteur (non représenté) entouré par la nacelle 110.

Dans la description qui suit, et par convention, on appelle X l'axe longitudinal de la nacelle 110 orienté positivement dans le sens d'avancement de l'aéronef 100 et qui est également parallèle à l'axe longitudinal de l'aéronef 100, on appelle Y l'axe transversal de la nacelle 110 qui est horizontal lorsque l'aéronef 100 est au sol, et Z l'axe vertical ou hauteur verticale lorsque l'aéronef 100 est au sol, ces trois directions X, Y et Z étant orthogonales entre elles et formant un repère orthonormé.

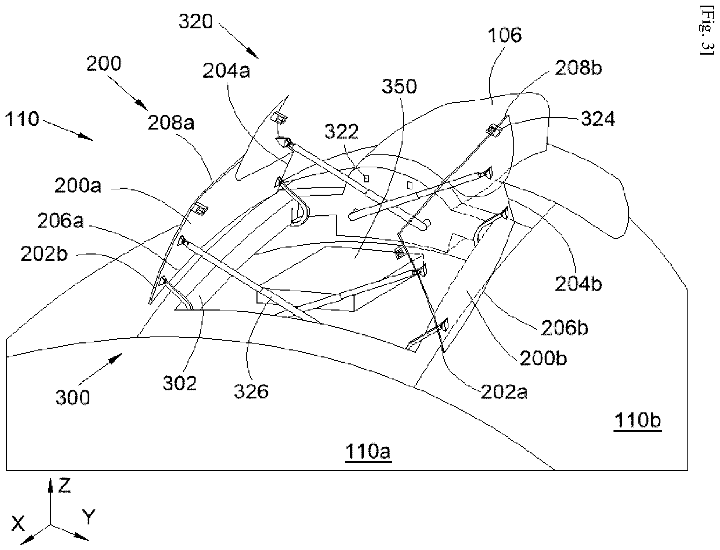

La Fig. 2 montre la jonction entre la nacelle 110 et le mât d'accrochage 106. La nacelle 110 comporte une structure (302, Fig. 3) et plusieurs capots (ou carénages) 110a-b, 200 qui sont fixés à la structure 302 afin de réaliser une surface aérodynamique. De manière connue, la nacelle 110 comprend une entrée d'air 109 par laquelle le moteur aspire l'air nécessaire à son fonctionnement. La nacelle 110 comporte, en particulier, en partie haute et devant le mât d'accrochage 106 (c'est-à-dire entre l'entrée d'air 109 et le mât 106), un capot supérieur 200 à deux vantaux articulés.

Le capot supérieur 200 se positionne à l'arrière d'un capot amont 110a qui s'étend lui-même vers l'arrière depuis l'entrée d'air 109. Le capot supérieur 200 se positionne entre des capots latéraux 110b.

Le capot supérieur 200 comporte deux vantaux 200a-b, à savoir un vantail tribord 200a et un vantail bâbord 200b. Les deux vantaux 200a-b sont contigus l'un de l'autre. Chaque vantail 200a-b est articulé pour passer d'une position fermée (Fig. 2) à une position ouverte (Fig. 3).

Chaque vantail 200a-b comporte quatre bords 202a-b, 204a-b, 206a-b et 208a-b opposés deux à deux.

Chaque vantail 200a-b présente plus particulièrement un bord avant 202a-b qui est disposé à l'avant du vantail 200a-b par rapport à l'axe longitudinal X et qui est globalement parallèle à l'axe transversal Y.

Chaque vantail 200a-b présente plus particulièrement un bord arrière 204a-b qui est disposé à l'arrière du vantail 200a-b par rapport à l'axe longitudinal X et qui est également globalement parallèle à l'axe transversal Y.

Chaque vantail 200a-b présente plus particulièrement un bord intérieur 208a-b qui, en position fermée, est contigu au bord intérieur 208b-a de l'autre vantail 200b-a.

Chaque vantail 200a-b présente plus particulièrement un bord extérieur 206a-b qui est disposé du côté opposé au bord intérieur 208a-b dudit vantail 200a-b.

Le bord extérieur 206a du vantail tribord 200a est disposé à tribord dudit vantail tribord 200a et le bord extérieur 206b du vantail bâbord 200b est disposé à bâbord dudit vantail bâbord 200b.

Chaque bord intérieur 208a-b et chaque bord extérieur 206a-b sont globalement parallèles à l'axe longitudinal X.

La Fig. 2 montre le capot supérieur 200 en position fermée et la Fig. 3 montre le capot supérieur 200 en position ouverte. Sur la Fig. 3, le capot supérieur 200 est montré en transparence.

Chaque vantail 200a-b est monté articulé sur la structure 302 de la nacelle 110 entre la position fermée (Fig. 2) dans laquelle ledit vantail 200a-b est en continuité aérodynamique avec les autres capots 110a-b de la nacelle 110, en particulier le capot amont 110a, et la position ouverte (Fig. 3) dans laquelle ledit vantail 200a-b libère une ouverture dans la nacelle 110 afin d'accéder à l'intérieur de la nacelle 110 et en particulier aux systèmes de l'aéronef 100 qui s'étendent entre le mât d'accrochage 106 et le moteur comme, en particulier, un boîtier électrique 350. En outre, chaque vantail 200a-b est moins lourd qu'un capot monobloc et les éléments permettant l'articulation de chaque vantail 200a-b peuvent être relativement légers.

Pour chaque vantail 200a-b, la nacelle 110 comporte une articulation 300 et un système de verrouillage 320. L'articulation 300 est fixée entre le vantail 200a-b et la structure 302 et est disposée au niveau du bord extérieur 206a-b. L'articulation 300 assure le déplacement du vantail 200a-b de la position ouverte à la position fermée et inversement. Le système de verrouillage 320 verrouille ledit vantail 200a-b en position fermée. Chaque vantail 200a-b s'ouvre de manière centrale par rotation autour de son bord extérieur 206a-b.

Le système de verrouillage 320 est réparti entre le bord avant 202a-b et le bord arrière 204a-b.

Chaque articulation 300 prend ici la forme de deux charnières en col de cygne, chacune étant fixée entre la structure 302 et le vantail 200a-b, où une charnière est au niveau du bord avant 202a-b et une charnière est au niveau du bord arrière 204a-b.

Chaque système de verrouillage 320 est mobile entre une position de verrouillage dans laquelle il bloque le déplacement du vantail 200a-b associé par rapport à la structure 302 de la nacelle 110 et une position de déverrouillage dans laquelle il autorise le déplacement du vantail 200a-b associé par rapport à la structure 302 de la nacelle 110. Le système de verrouillage 320 est actionné par tous moyens appropriés comme par exemple une poignée actionnable depuis l'extérieur de la nacelle 110, ou comme par exemple une commande électrique.

Le passage de la position fermée à la position ouverte de chaque vantail 200a-b s'effectue par basculement dudit vantail 200a-b autour de l'articulation 300 et par soulèvement du bord intérieur 208a-b.

Dans le mode de réalisation de l'invention présenté ici, chaque système de verrouillage 320 comporte sur la structure 302 et au voisinage du bord avant 202a-b et du bord arrière 204a-b un pêne 322 actionnable et mobile horizontalement sur la structure 302.

Chaque système de verrouillage 320 comporte également pour chaque pêne 322, une gâche 324 solidaire du vantail 200a-b dans laquelle le pêne 322 pénètre en position de verrouillage et en sort en position de déverrouillage lorsqu'il est actionné. Dans le mode de réalisation de l'invention présenté ici, le pêne 322 disposé le long du bord arrière 204a-b s'escamote vers l'arrière pour sortir de la gâche 324 et le pêne 322 disposé le long du bord avant 202a-b s'escamote vers l'avant pour sortir de la gâche 324.

Dans le mode de réalisation de l'invention présenté sur la Fig. 3, pour chaque vantail 200a-b, la nacelle 110 comporte au moins un vérin 326 (ici au nombre de deux). Chaque vérin 326 présente une première extrémité montée articulée sur la structure 302 et une deuxième extrémité montée articulée sur le vantail 200a-b. Le vérin 326 assiste l'ouverture du vantail 200a-b et assure le maintien en position ouverte et est par exemple un vérin à gaz.

## Revendications

1. Nacelle (110) d'un aéronef (100), ladite nacelle (110) présentant une entrée d'air (109) et comportant :
- une structure (302),
- un capot amont (110a) fixé à ladite structure (302) afin de réaliser une surface aérodynamique et s'étendant vers l'arrière depuis l'entrée d'air (109),
- un capot supérieur (200) disposé en partie haute de la nacelle (110) et à l'arrière du capot amont (110a) et présentant un vantail tribord (200a) et un vantail bâbord (200b), chaque vantail (200a-b) étant articulé entre une position fermée dans laquelle ledit vantail (200a-b) est en continuité aérodynamique avec le capot amont (110a) et une position ouverte dans laquelle ledit vantail (200a-b) libère une ouverture dans la nacelle (110), chaque vantail (200a-b) présentant un bord avant (202a-b) disposé à l'avant du vantail (200a-b), un bord arrière (204a-b) disposé à l'arrière du vantail (200a-b), un bord intérieur (208a-b) qui, en position fermée, est contigu au bord intérieur (208b-a) de l'autre vantail (200b-a), et un bord extérieur (206a-b) disposé du côté opposé au bord intérieur (208a-b) dudit vantail (200a-b),
- pour chaque vantail (200a-b), une articulation (300) disposée au niveau du bord extérieur (206a-b) et fixée entre le vantail (200a-b) et la structure (302), ladite articulation (300) assurant le déplacement du vantail (200a-b) de la position ouverte à la position fermée et inversement, et
- pour chaque vantail (200a-b), un système de verrouillage (320) réparti entre le bord avant (202a-b) et le bord arrière (204a-b), et mobile entre une position de verrouillage dans laquelle il bloque le déplacement du vantail (200a-b) par rapport à la structure (302) et une position de déverrouillage dans laquelle il autorise le déplacement du vantail (200a-b) par rapport à la structure (302).

2. Nacelle (110) selon la revendication 1, **caractérisée en ce que** chaque articulation (300) prend la forme de deux charnières en col de cygne, chacune étant fixée entre la structure (302) et le vantail (200a-b).

3. Nacelle (110) selon la revendication 2, **caractérisée en ce qu'**elle comporte une charnière au niveau du bord avant (202a-b) et une charnière au niveau du bord arrière (204a-b).

4. Nacelle (110) selon l'une des revendications 1 à 3, **caractérisée en ce que** chaque système de verrouillage (320) comporte sur la structure (302) et au voisinage du bord avant (202a-b) et du bord arrière (204a-b), un pêne (322) actionnable et mobile horizontalement, pour chaque pêne (322), une gâche (324) solidaire du vantail (200a-b) dans laquelle le pêne (322) pénètre en position de verrouillage et en sort en position de déverrouillage.

5. Aéronef (100) comportant un mât d'accrochage (106) et une nacelle (110) selon l'une des revendications précédentes, accroché audit mât d'accrochage (106).

## Patentansprüche

1. Gondel (110) eines Luftfahrzeugs (100), wobei die Gondel (110) einen Lufteinlass (109) aufweist und umfasst:
- eine Struktur (302),
- eine stromaufwärtige Haube (110a), die an der Struktur (302) befestigt ist, um eine aerodynamische Oberfläche herzustellen, und sich vom Lufteinlass (109) aus nach hinten erstreckt,
- eine obere Haube (200), die im oberen Teil der Gondel (110) und hinten an der stromaufwärtigen Haube (110a) angeordnet ist und einen steuerbordseitigen Flügel (200a) und einen backbordseitigen Flügel (200b) aufweist, wobei jeder Flügel (200a-b) zwischen einer geschlossenen Position, in welcher sich der Flügel (200a-b) in aerodynamischer Kontinuität mit der stromaufwärtigen Haube (110a) befindet, und einer offenen Position, in welcher der Flügel (200a-b) eine Öffnung in der Gondel (110) freigibt, gelenkig bewegbar ist, wobei jeder Flügel (200a-b) einen vorderen Rand (202a-b), der vorn an dem Flügel (200a-b) angeordnet ist, einen hinteren Rand (204a-b), der hinten an dem Flügel (200a-b) angeordnet ist, einen inneren Rand (208a-b), welcher in der geschlossenen Position an den inneren Rand (208b-a) des anderen Flügels (200b-a) angrenzt, und einen äußeren Rand (206a-b), der auf der dem inneren Rand (208a-b) des Flügels (200a-b) gegenüberliegenden Seite angeordnet ist, aufweist,
- für jeden Flügel (200a-b), ein Gelenk (300), das am äußeren Rand (206a-b) angeordnet und zwischen dem Flügel (200a-b) und der Struktur (302) befestigt ist, wobei das Gelenk (300) die Verlagerung des Flügels (200a-b) von der offenen Position zur geschlossenen Position und umgekehrt sicherstellt, und
- für jeden Flügel (200a-b), ein Verriegelungssystem (320), das zwischen dem vorderen Rand (202a-b) und dem hinteren Rand (204a-b) aufgeteilt ist und zwischen einer Verriegelungsposition, in welcher es die Verlagerung des Flügels (200a-b) in Bezug auf die Struktur (302) blockiert, und einer Entriegelungsposition, in welcher es die Verlagerung des Flügels (200a-b) in Bezug auf die Struktur (302) ermöglicht, beweglich ist.

2. Gondel (110) nach Anspruch 1, **dadurch gekennzeichnet, dass** jedes Gelenk (300) die Form von zwei schwanenhalsförmigen Scharnieren annimmt, die jeweils zwischen der Struktur (302) und dem Flügel (200a-b) befestigt sind.

3. Gondel (110) nach Anspruch 2, **dadurch gekennzeichnet, dass** sie ein Scharnier am vorderen Rand (202a-b) und ein Scharnier am hinteren Rand (204a-b) umfasst.

4. Gondel (110) nach einem der Ansprüche 1 bis 3, **dadurch gekennzeichnet, dass** jedes Verriegelungssystem (320) an der Struktur (302) und in der Nähe des vorderen Randes (202a-b) und des hinteren Randes (204a-b) einen betätigbaren und horizontal beweglichen Riegel (322) und für jeden Riegel (322) ein mit dem Flügel (200a-b) fest verbundenes Schließteil (324), in welches der Riegel (322) in der Verriegelungsposition eindringt und aus dem er sich in der Entriegelungsposition hinausbewegt, umfasst.

5. Luftfahrzeug (100), welches eine Aufhängungsstruktur (106) und eine Gondel (110) nach einem der vorhergehenden Ansprüche, die an der Aufhängungsstruktur (106) aufgehängt ist, umfasst.

## Claims

1. Nacelle (110) of an aircraft (100), the said nacelle (110) having an air intake (109) and comprising:
- a structure (302),
- an upstream cowl (110a) fixed to the said structure (302) in order to create an aerodynamic surface and extending rearward from the air intake (109),
- an upper cowl (200) arranged in the upper part of the nacelle (110) and to the rear of the upstream cowl (110a) and having a starboard-side door (200a) and a port-side door (200b), each door (200a-b) being articulated between a closed position in which the said door (200a-b) is aerodynamically continuous with the upstream cowl (110a) and an open position in which the said door (200a-b) uncovers an opening in the nacelle (110), each door (200a-b) having a front edge (202a-b) arranged at the front of the door (200a-b), a rear edge (204a-b) arranged at the rear of the door (200a-b), an inner edge (208a-b) which, in the closed position, is contiguous with the inner edge (208b-a) of the other door (200b-a), and an outer edge (206a-b) arranged on the opposite side of the said door (200a-b) to the inner edge (208a-b),
- for each door (200a-b), an articulation (300) arranged at the level of the outer edge (206a-b) and fixed between the door (200a-b) and the structure (302), the said articulation (300) allowing the door (200a-b) to move from the open position to the closed position and vice versa, and
- for each door (200a-b), a locking system (320) distributed between the front edge (202a-b) and the rear edge (204a-b) and able to move between a locked position in which it blocks the movement of the door (200a-b) with respect to the structure (302) and an unlocked position in which it allows the door (200a-b) to move with respect to the structure (302).

2. Nacelle (110) according to Claim 1, **characterized in that** each articulation (300) takes the form of two gooseneck hinges, each one being fixed between the structure (302) and the door (200a-b).

3. Nacelle (110) according to Claim 2, **characterized in that** it comprises a hinge at the level of the front edge (202a-b) and a hinge at the level of the rear edge (204a-b).

4. Nacelle (110) according to one of Claims 1 to 3, **characterized in that** each locking system (320) comprises, on the structure (302) and in the vicinity of the front edge (202a-b) and of the rear edge (204a-b), a locking bolt (322) that can be actuated and can move horizontally and, for each locking bolt (322), a strike (324) secured to the door (200a-b) and which the locking bolt (322) enters in the locked position and leaves in the unlocked position.

5. Aircraft (100) comprising a pylon (106) and a nacelle (110) according to one of the preceding claims, attached to the said pylon (106).
